# EUROPEAN PATENT SPECIFICATION

(11) **EP 4 638 620 B1**
(45) Date of publication and mention of the grant of the patent: **23.09.2026**
(21) Application number: 23820842.5
(22) Date of filing: 06.12.2023
(51) Int. Cl.: C09D 123/08, C08L 23/04, C08L 23/14, C08L 83/04, C08L 51/06, C08L 77/00, C08K 5/05

(54) **HEAT-SEAL LACQUER BASED ON A WAX CONTAINING DISPERSION**
HEISSSIEGELLACK AUF BASIS EINER WACHSHALTIGEN DISPERSION
VERNIS THERMOSCELLABLE À BASE D'UNE DISPERSION CONTENANT DE LA CIRE

(30) Priority: 20.12.2022 EP 22214944
(43) Date of publication of application: 29.10.2025
(73) Proprietor: Actega GmbH, 46483 Wesel (DE)
(72) Inventor: KROMKOWSKA, Karolina, 46483 Wesel (DE); DICKMANN, Markus, 46483 Wesel (DE); ASKEVOLD, Björn, 46483 Wesel (DE); LIEVEN, Friedhelm, 46483 Wesel (DE)
(74) Representative: Altana IP Department
(86) International application number: PCT/EP2023/084536
(87) International publication number: WO 2024/132534

(56) References cited:
- WO-A1-2015/180960
- WO-A1-2021/047874
- WO-A2-2011/011707
- US-A1- 2015 344 729
- BASF: "Safety data sheet SECTION 1: Identification of the substance/mixture and of the company/undertaking", 18 September 2015 (2015-09-18), pages 1 - 11, XP093030139, Retrieved from the Internet <URL:https://safety365.sevron.co.uk/substances/accessSDS/SDS-6844-568f90946f75c6.40519774> [retrieved on 20230309]
- ANONYMOUS: "Dow HDPE 30460M High Density Polyethylene", 9 March 2023 (2023-03-09), pages 1 - 2, XP093030163, Retrieved from the Internet <URL:https://www.matweb.com/search/datasheet.aspx?matguid=1e64af3bf8684a10a9391c8b887e6765> [retrieved on 20230309]
- REFERENZ 0 ET AL: "Technisches Datenblatt", 26 July 2010 (2010-07-26), pages 1 - 1, XP093030121, Retrieved from the Internet <URL:https://www.hillmann-geitz.de/media/articles/pdf/101038358_TDB_Macromelt_6239.pdf> [retrieved on 20230309]

## Description

The present invention relates to an aqueous polyolefin dispersion, to a container, to an extraction process and to the use of the aqueous polyolefin dispersion.

Solid-liquid extraction allows soluble components to be removed from solids using a solvent. Applications of this unit operation include obtaining oil from oil seeds or leaching of metal salts from bores.

An everyday example is the preparation of coffee. Here, water (solvent) is used to remove the coffee flavors (being transition components) from the coffee powder (solid carrier provided by the extraction material, where the solid carrier contains the transition component). Ideally, this results in drinkable coffee (solvent with dissolved flavors), with the completely depleted coffee grounds (solid carrier phase) remaining in the coffee filter. In reality, the solid carrier will still contain some transition component after completion of the extraction. In addition, some of the solvent will still be adsorptively bonded to the solid carrier.

To achieve the fastest and most complete solid extraction possible, the solvent has to be provided with large exchange surfaces and short diffusion paths. This can be done by pulverising the solid to be extracted. However, an excessively small grain size can cause agglutination and make it more difficult for the solvent to permeate. In the simplest form of this unit operation, the extraction material and the solvent are mixed well.

Extraction is a separation process which contains the separation of at least one transition component from a carrier (a matrix). The distribution of a solute between two phases is an equilibrium condition described by partition theory. This is based on exactly how the analyte moves from the initial solvent into the extracting solvent.

Coffee brewing might be seen as to be an extraction process of daily practice. In our day very often special coffee systems or hot beverage systems are used as special coffeemaker. The extraction of coffee is carried out in a special disposable capsule-shaped-brewing-container. Each brewing container has one serving of coffee, tea, milk, and other ingredients in it. This makes it easy to make coffee, espresso, etc. The process is very clean and convenient.

In such a closed disposable brewing container the capsule body and the lidding foil (antagonist foil) are connected by means of a heat-seal lacquer which often provides also the inner coating of the capsule.

WO2015180960 concerns such a disposable beverage-brewing container comprising a body, with the beverage-forming ingredients and an antagonist foil connected to the body, by means of a heat-seal lacquer for closing it. In general, reaching higher pressures in the disposable beverage-brewing container causes a greater transport of flavors from the ingredients, intended for the formation of the beverage, into the injected liquid and therefore a beverage of higher quality. However, these higher pressures may cause a leakage or rupture at the level of the seal between the body and the antagonist foil and thus do not allow an optimal retaining of the liquid inside the container. Consequently, on the one hand the used heat-seal system must provide a stable closing of the beverage container. However, on the other hand said heat-seal system should not be environmental problematical or critical concerning food-safety. Unfortunately, this is often difficult to combine with the needed strong closing properties because the typically used heat seal lacquers normally need (in order to perform well) such critical components, like polyvinylchloride.

Additionally, it should be taken into consideration that there is a high price pressure in the relevant market so that expensive solutions are normally not compatible.

Thus, the object of the invention is to present an economical technical solution for providing a heat seal technology which might be the basis of a convenient hot beverage system. Because relevant extraction processes might be carried out at high pressures/temperatures the heat seal result should provide a corresponding robustness. Additionally, the corresponding heat seal system should not need (and preferably should not contain) food-safe-critical or environmental problematical components like polyvinylchloride in order to guarantee said robustness.

The solution to this problem is an aqueous polyolefin dispersion Y comprising as ingredients
a) from 41 to 97 wt.% of A1, copolymer containing structural units of ethylene and (meth)acrylic acid (EAA),
b) A2, polymer containing no structural units of (meth)acrylic acid, which as such is solid at 120 °C and

from 3 to 34 wt.% of A22, a polymer portion containing no structural units of (meth)acrylic acid and which as such is completely solid at a temperature of 60 °C and completely melted at a temperature of 190 °C, where at least a partial quantity of A22 is provided by A2,
the wt.% of the ingredients are based on the dried dispersion Y (drying the aqueous dispersion 30 min at 150 °C; according to DIN EN ISO 3251),
where the dried dispersion Y contains solid polymer at a temperature of 120 °C (the melting range or melting point is measured using differential scanning calorimetry (DSC) according to a modified DIN EN ISO 11357-1:2017-02; relevant modifications: the measurements were carried out under nitrogen in a temperature range of - 20 to 200 °C and a heating rate of 10 K/min).

"The wt.% of the ingredients (and also the melting point determinations) are based on the dried dispersion Y" means that after removal of the water (and possible other volatile ingredients like volatile solvents), the dried (normally solid) content of the aqueous polyolefin dispersion is relevant for determining the (accurate) relevant composition (wt.% values):
In order to be able to specify values that are as accurate as possible (wt.-% values of the ingredients), the degree of drying should be defined in this regard (because different drying methods could cause slightly different values of "residual water content").

In this connection the relevant degree of the corresponding dryness should be defined - the drying (removal of the water/ and optional other volatile ingredients) was performed as follows, in order to provide a definition basis of the wt.% values of the dried dispersion Y:
A sample of the aqueous dispersion is dried for 30 minutes at 150 °C: details provided by DIN EN ISO 3251 (of 2019).

In case relevant melting range or melting point values (of the dispersion or relevant ingredients) might depend on the (its) degree of drying, said drying method should be relevant (accordingly), too.

A2 (and normally the whole "wax" charge A22 which contributes A2 - please find below) works as a wax (additive) which preferably should support the relevant production/processing.

A1 might be regarded as a kind of dispersing polymer.

The applied heat-seal lacquer contains or consists of a coating based on the dried aqueous polyolefin dispersion Y. Generally, the coating refers to the already processed system (typically the already dried) coating composition. The non-processed pre product of the coating composition is the aqueous polyolefin dispersion which typically contains a high amount of water.

The coating composition generally shows a good adhesion when applied onto a substrate. Thus, the coating composition is not only appropriate as a heat seal-lacquer but additionally provides also an excellent coating with good mechanical properties which is especially relevant in connection with the fact that the relevant coated material has to be stressed by a drawing/shaping process (after the coating is applied and dried). Due to the simplification of the production process it is an economical advantage that the coating composition is usable for both: as the heat-seal lacquer and as the coating being in direct food-contact. Additionally, the coating composition might be also used for the outer coating (coating for the other side of the substrate foil).

Also the properties as heat-seal lacquer are very well. E. g. a stable closing of a beverage container might be achieved so that especially higher pressures in the container would not cause a leakage or rupture at the level of the produced seal.

The high resistance to chemical stress at elevated temperatures, which is relevant for the food sector (especially in extraction processes), is an essential quality feature of the (dried) heat seal lacquer. Especially, the said resistance can be determined by "boiling ethanol" which is in contact with the lacquer and subsequent visual inspection of the stressed lacquer (see below).

Furthermore, the heat seal lacquer allows (enables) an economical and industrially practical (economical) manufact process/processing of the extraction container.

The use of the aqueous polyolefin dispersion Y provides the advantage that the behaviour of sealing- & deepdrawing performance (mechanical properties) as well as substrate- and foodstuff protection (health question) are well balanced (at the same time working well).

The use of said dispersion especially ensures that the relevant heat-sealing film (coating) remains undamaged during a mechanical shaping (e. g. deep drawing of the corresponding coated substrate). Otherwise, irregularities in the paintwork, such as micro-cracks, typically occur. This normally leads to the generation of leaks within the heat-seal seam. Thus, the use of said dispersion especially ensures the provision of a mechanically durable (robust and uniform) heat-seal seam which guarantees a reliable closure.

The coating composition generally contains only food safe and environmentally non-critical ingredients: All ingredients should be safe for direct food contact. This means that such ingredients should be compliant with or described in EU No 10/2011 or US 21 CFR 174 - 21 CFR 190. In particular, the coating compositions should be FDA-compliant according to 21 CFR 175.300 or 21 CFR 178.3297.

To achieve a high degree of dryness the coating typically has been treated during its drying (shortly - according to a rapid economical processing) with temperatures of 130 - 180, preferably of 140 - 170 °C.

In one embodiment, the coating based on the dried aqueous polyolefin dispersion Y has been dried in a printing machine in which in a prior step the non-dried aqueous dispersion had been applied.

The non-processed pre product of the coating composition is the aqueous polyolefin dispersion Y which typically contains a high amount of water (generally water as the main liquid component). However, the continuous phase of such a dispersion might not only contain water but also other liquid ingredients like alcohols (e. g. ethanol) and/ or esters (e. g. ethyl acetate). However, the proportion of water and these other liquid ingredients (especially solvents) in the aqueous phase of the dispersion is generally at least 3 : 1 (proportion of "weight contents"). In some cases such additional solvents support the corresponding processing but it is generally possible to avoid these additional solvents.

The (preparation) type of the used dispersion is normally a so called secondary dispersion which is preparable by (intensive) mechanical mixing of the ingredients within the dispersant.

The aqueous polyolefin dispersion Y comprises as ingredients from 41 to 97 wt.% of A1 and from 3 to 34 wt.% of A22, a polymer portion containing no structural units of (meth)acrylic acid and which as such is completely solid at a temperature of 60 °C and completely melted at a temperature of 190 °C (concerning the polymer as such and preferably also the polymer in the dispersion), where at least a partial quantity of A22 is provided (contributed) by A2.

In other words: first of all, according to the invention, it is assumed that in any case a corresponding polymer must be contained which has not yet melted at 120 °C (referred to as A2). At least a subset of this is contributed by the "polymer batch" A22, which is still completely solid at 60 °C but has completely melted at 190 °C (conversely, of course, this also means that at least a fraction of A22 is provided by A2 - as expressed above). Thus, it is essential that at least a subset of the "polymer batch" A22 has not yet melted at 120 °C (if one were to express oneself in terms of set theory, it could be said "that A2 and A22 form at least an intersection with each other"). The relative proportion of the "polymer batch" A22 is quantified according to the invention.

A22 (and A2) is added because it imparts wax properties (at least in the defined quantitative proportion of A22), especially with regard to melting behavior. These wax properties are particularly important with regard to economic processing (prevention of "block behavior") of the (dried) aqueous dispersion. Dried aqueous dispersions ("agglomerates of polymer particles") show special sealing properties (hot melt adhesives of special quality) compared to corresponding continuous polymer systems. From an economic and especially an environmental point of view, aqueous dispersions are highly attractive compared to conventional polymer systems (especially those containing solvents). Many users are therefore generally asking more and more for such aqueous alternatives to "conventional" hot melt adhesives.

Preferably, the aqueous polyolefin dispersion Y does not contain solid polymer at a temperature of 190 °C (or is at least essentially free of solid polymer at this temperature).

Often, the aqueous polyolefin dispersion Y contains as ingredient(s) from 41 to 97 wt.% of A1, preferably 41 - 94 wt.% of A1.

Typically, the aqueous polyolefin dispersion Y contains as ingredients from 41 to 94 wt.% of A1 and from 6 to 24 wt.% of A22.

According to a special embodiment, the dispersion Y comprises as ingredients
a) from 41 to 91 wt.% of A1,
b) from 6 to 24 wt.% of A22, and
c) from 3 to 35 wt.% of A33, a copolymer portion containing no structural units of (meth)acrylic acid and which as such is not completely solid at a temperature of 60 °C, where A33 does not provide polymer which as such (and preferably also said polymer in the dispersion) is solid at 120 °C.

The used polymer batches (polymer portions) of A22 and A33 (and normally also those providing A1) are usually polymer blends composed of different molecular weight species. Due to this fact in particular, relatively wide melting ranges of the polymer batches as such and of the resulting dispersion containing the polymer batches are observed in practice.

The melting properties of the dispersion can be adjusted by a specialist in a very specific manner (often, not even routine tests were required for this) purely for example by assembling the polymeric dispersion components from (in particular already commercially available) polymer batches providing A1 and A22 (A2) (and possibly also A33).

Typically, at least 50 wt.%, preferably at least 80 wt.% of the species of A33 are selected from the group consisting of copolymers (EVA) containing structural units of ethylene and vinyl acetate and copolymers containing structural units of ethylene and olefines having at least three carbon atoms.

Generally, possible A33 species might be selected from the group consisting of copolymers of ethylene and vinyl acetate (EVA), copolymers of ethylene and vinyl acetate (EVA) modified with maleic anhydride, polyolefins modified with maleic anhydride, polyolefin elastomers, styrene butadiene block copolymers (SBS), ethylene-propylene-non-conjugated diene terpolymer (EPDM), maleic anhydride modified ethylene-propylene-non-conjugated diene terpolymer, and co- and terpolymers of ethane, propene, and 1-butene.

Examples of suitable commercially available A33 type polymers that can be used include Polybond^{®} 3000, Polybond 3349^{®} and Royaltuf^{®} (all ex Addivant), Orevac^{®} T9305 (ex. Arkema), Affinity GA1950 (ex. Dow), Bynel^{®} E418 (ex. DuPont), Vestoplast^{®} 508, Vestoplast^{®} 751 (both ex. Evonik), Escorene FL00328, Escorene AD0428EM1, Vistamax 6202 (all ex. ExxonMobil), and Kraton^{®} D1157 (ex. Kraton).

Typically, at least 50 wt.% of A2 and/ or A22, preferably at least 80 wt.% of A2 and/ or A22 are selected from the group consisting of polyethylene based (PE), polypropylene based (PP) and polyamide based waxes.

Typically, an A22 content of less than 3 wt. % can make processability more difficult (particularly causes unwanted "blocking") and thus might degrade the economy of the technology (please find relevant processing details below).

Typically, an A22 content of above 24 wt. % (especially of above 34 wt. % and generally of above 49 wt. %) degrades resistance (chemical and physical robustness), which is essential for the relevant applications. This might be shown, for example, in an "ethanol boiling" test: blushing and/or delamination might be caused if high amounts of wax were used.

Not using (or using not enough) wax is therefore associated with poorer processability, which significantly impairs the economics of the underlying technology.

Additionally, often (too) high A2 and/or A22 contents (however, depending on the kind of the wax) have a negative impact on the relevant seal strength.

Accordingly, a content of A2 and/or A22 that achieves a suitable "compromise" between resistance and processability (in manufacture) is generally advantageous.

Preferably, at least 50 wt.% of A1, more preferably at least 80 wt.% of A1 has a content of (meth)acrylic acid based groups of 10-30 wt.% and ethylene based groups of 70-90 wt.% based on all contained copolymer structural units.

Preferred A1 types are melt processable, for example a copolymer having a Melt Flow Index (MFI) of between 2 to 600 g/10 min, as measured at 190 °C at a load of 2,16 kg.

Generally, most A1 types are provided by polymer portions with a relative low melting range: at least at 120 °C all A1 polymer (as such and in the dispersion) is normally melted (normally, no solid A1 in the dispersion at 120 °C).

Examples of suitable commercially available copolymers of polyethylene and (meth)acrylic acid that can be used in the dispersion according to the present invention are available as trade products and might include Primacor^{™} 5980 (ex. Dow Chemicals), Nucrel^{®} 2806 (ex. DuPont) and Escor^{™} 5200 (ex Exxonmobil).

The aqueous polyolefin dispersion Y might comprise further ingredients like defoamers, adhesion promoters, wetting additives, surface active substances, bases (like NH₃ or KOH) for adjusting the pH value of the dispersion and or fillers.

For example as ingredients inorganic filler, defoamer, ammonia or other basic pH regulators might be contained.

However, generally further additive components can be present in the aqueous dispersion, for example dispersing agents, rheology additives, adhesion promotors, tackifiers, defoamers, fillers, pigments and any other material that is known for use in polymer dispersions or polymer compositions.

The size of the particles that are present in the aqueous polyolefin dispersion should be normally < 150 µm. Typical aqueous dispersion properties are: pH value of 7 - 11 (preferably 8 - 10), solid content 10 - 50 wt.%, Viscosity 30 - 800 mPa*s and average particle size from 1 to 50 µm.

According to a preferred embodiment the coating composition contains less than 1 wt.%, more preferably no, polyvinylchloride. According to the present invention it is not necessary to use polyvinylchloride as a component of the coating composition because the requested performance is achievable without polyvinylchloride.

It is generally advantageous to avoid polyvinylchloride because it is environmentally critical. Especially dioxine forming during thermal waste treatment is observed. Additionally, externally plasticized PVC-Polymers are under authority investigation due to plasticizer migration into food material.

The inventions is also directed to a container C comprising a lidding foil and a body defining a receiving space, the lidding foil and the body are connected to one another with a heat-sealed seam, where the heat-sealed seam contains a heat-seal lacquer containing or consisting of a coating based on a dried aqueous polyolefin dispersion Y as described above.

Typically, the container C is provided by a (closed) beverage-brewing container, preferably by a portion pack brewing container.

Preferably, the lidding foil and the body defining a receiving space are each provided by a metal or a metal alloy, preferably on the basis of aluminum (typically aluminum only).

Other materials might be plastic films (polymer based) or laminates of "plastics- and aluminum".

The body defining a receiving space has typically a cup-like shape ("volume of the cup as the receiving space") like the body of a commercially available coffee capsule. Typically, the body has a flange extending from its jacket wall, where the heat-sealed seam lies on said flange. This enlarges the heat-sealing surface (relevant contact surface with lidding foil).

Normally, the inner surface of the body is completely coated with the heat-seal lacquer. This increases the economy of the corresponding technology because the processing is simplified.

Furthermore, the coating (and also the heat-sealed seam) acts as an off taste-barrier, preventing filling goods from aluminum taste. Additionally, the coating layer (and also the "pre-heat-sealed seam") supports the surface mobility during the deep drawing process.

Typically, the (dried) relevant heat-seal lacquer coating has a thickness of 6 - 17 g/m2.

Normally, both sides to be heat-sealed with each other are coated (lidding foil and body). The (outer side - not to be heat-sealed) might be also coated with a different, e.g. non-polyester based coating type.

According to a preferred embodiment of the present invention the heat-sealed seam provides a sealing-seam strength of more than 12 N/15mm, preferably of more than 16 N/15mm (according to a modified DIN 55529, 2012 edition - modifications: trigger angle is 180°, testing speed is 200 mm/min).

Typically, a substrate foil is shaped as a container which inner surface is completely coated with the heat-seal lacquer, where said heat-seal lacquer coating preferably has a thickness of 6 - 12 g/m² (thickness of the dried layer).

Such corresponding container body typically comprises the heat-seal lacquer not only at the relevant seal area but also as the inner coating of the capsule. The structure to be heat-sealed further comprises the lidding foil (as an antagonist foil, typically aluminum based) which is (normally) also (pre)coated with (the) heat-seal lacquer - prior the heat-sealing. The lidding foil is often shaped (e.g. embossed) before sealing for promotional purpose or in order to increase its mechanical stability.

A relevant substrate foil for the body might be aluminum based (e.g.: 80-100 µm Al8011) and the lidding foil also aluminum based (e.g.: 38 µm Al9901).

Preferably, the substrate foil for the body and the lidding foil are coated with the same heat-seal lacquer.

The typical method for manufacturing such a (closed) container as described above (used as the container C) has the following steps: providing a lidding foil and a body defining a receiving space, introducing the carrier (as the filling material) into the receiving space and closing the container by heat-sealing, where the body is generated as a blank which before the introducing of the filling material had been formed in its geometry, where
the generation of the blank includes the following steps:
step 1: at least a partial area of a provided substrate foil is coated with an aqueous coating comprising the ingredients of the (dried) heat-seal lacquer and
step 2: the thus coated substrate foil is further heated to a peak metal temperature (PMT) of at most 180 °C in order to remove the dispersant (water).

"Peak metal temperature" (PMT) refers to a temperature of the relevant substrate, in the current patent application to the temperature of the substrate which is normally provided by a metal or metal alloy foil. In general, the peak metal temperature is lower than the temperature of the oven that is used to heat the metal and depends, i.e., on the residence time in the oven.

Normally, it is preferred that the substrate foil is coated with an aqueous borne coating comprising the ingredients of the heat-seal lacquer. In principle, however, it is at least possible to provide the ingredients of the heat-seal lacquer by means of a melt (typically by using an extruder).

Step 2 allows a mechanical pretreatment especially a coiling without damaging the (pre)coated substrate. The peak metal temperature in step 2 should be high enough to obtain a tack-free coated substrate and at the same time should be low enough to enable step 1 to be done in the same environment (e.g. in a printing machine).

"Tack-free" in relation to a substrate means that the substrate is in a sufficiently robust state to resist damage by contact or handling and/or concerning the settling of dirt and/or concerning sticking to the backside in the coil. To test the tack-free time, the time can be determined by briefly pressing a polyethylene film against the surface of the substrate and to check for any adhering material when the film is removed. In such test a small weight can be used to provide a reproducible contact pressure.

Typically, after step 2 but also after step 3 the substrate might be cooled and rolled (as a coil). A coil is an attractive and economic possibility to handle and to transport the relevant substrate which is a pre-product that has to be further processed (typically at a different location).

To allow for the rolling of the coated substrate and unrolling in a next processing step without any detriment to the coating layer (providing a block-free coil), such substrate should have a low tack or be tack free. The heat-seal lacquer which is provided according to the present invention shows such sufficient low tack or tack free properties: for such rolling it is not in every case necessary for the coating layer to be fully cured and hardened (which makes the preparation process more economical), but it was found that it is sufficient for the coated substrate to have a low tack or be tack-free, such that any adhesion between the subsequent layers in a roll is so low that no damage is caused to the coating layer by the rolling or unrolling of the coated foil.

Rolling the substrate can be advantageous in particular in an embodiment where at least step 1 and step 2 are performed in a printing apparatus and the further processing of the coated substrate includes the mechanical processing of the coated substrate, for example when it is divided in smaller pieces of a coated foil and/or when the coated foil is formed, for example, in a deep drawing process.

Preferably, in a step 3 (after step 2) the coated substrate foil is further treated by coiling and thereafter in a step 4, preferably after unwinding, mechanically shaped by generating the body defining the receiving space.

Step 1 and step 2 might be performed in a printing apparatus or in a coil coating line. This simplifies the corresponding processing and provides a significant economical advantage.

In many cases (before step 4) in a step 3a the coated substrate is lubricated with natural or synthetic lubricant.

The coating might be subjected to various types of mechanical handling. It was found that such coated substrate is in particular suited for embossing or deep drawing of the coated substrate (in order to form the body defining the receiving space), since the coating layer on the substrate shows a high flexibility and a good adhesion.

Typically, in step 4 the coated substrate is shaped into the form of a portion pack brewing container (used as the container C). This preferably done by deep drawing or embossing.

Generally, the portion pack brewing container shape (as the receiving space of the body) is filled with extraction material (the carrier) so that the extraction material is in direct contact with the heat-seal lacquer and thereafter in the sealing step the heat-seal lacquer is activated accordingly by elevated temperature and increased pressure.

The inventions also concerns an extraction process carried out in the container C as described above, in which at least a portion of at least one transition component is separated from a carrier by a solvent, where the receiving space contains the carrier.

Typically, after the separation from the carrier at least a portion of the at least one transition component is discharged from the closed container by means of the solvent and whereby at least a portion of the carrier is retained in the container C, which is preferably accomplished by means of filtration.

Relevant transition components are typically soluble in the solvent. Normally, more than (only) one transition component is separated from the carrier (e. g. in the case of coffee extraction).

In a preferred embodiment of the invention after the separation from the carrier at least a portion of the at least one transition component is discharged from the closed container by means of the solvent.

Normally, at least a portion (preferably at least 60 wt.%) of the carrier is retained in the container C, which is preferably accomplished by means of filtration.

Typically, the solvent is introduced into and discharged from the container C at the same time (being a continuous process). This is normally practiced in the continuous brewing process in a coffee capsule.

Preferably, at least a portion of the carrier is provided by a solid phase carrier and at least a portion of the solvent is provided by a water containing solvent (or dispersion), preferably by drinking water.

Normally, the extraction process is caried out at an overpressure in the container C of 2 - 100, preferably 6 - 30 bar. Typically, the extraction process is caried out at a temperature in the container C of 40 - 120, preferably 60 - 100 °C. These are the typical extraction conditions in a coffee capsule. Very often the carrier contains or consists of coffee. However, the carrier might contain or consists of tea.

The use of capsules is very consumer friendly and easy to perform. No technical knowledge is required to use capsule machines. The machine is easy to use, and a cup of coffee can be prepared within about 30 seconds. After the brewing process, it is very easy to clean the machine, as you only need to remove the capsule. Compared to the normal espresso machines, a capsule machine is much cheaper.

The extraction process according to the invention (in particular brewing process) is further associated with the following advantages: low pollution, protection of the aroma, long shelf life and preservation of the flavorings (coffee powder, for example, can be stored in the capsule for over a year without noticeable loss of quality).

The invention is also directed to the use of an aqueous polyolefin dispersion Y as described above as a heat-seal lacquer.

According to said use the heat-seal lacquer might be provided to close a container, preferably a beverage-brewing container

Below the present invention is described in more detail by using examples.

**table 1 (waxes - as A22 component - containing polymer A2 which is not melted at 120 °C)**

| | **wax additive** | **melting range** |
|---|---|---|
| 1 | Ceraflour^{®} 914 as polypropylene wax (PP-wax) - usable but not used | 120°C - 169°C |
| 2 | Ceraflour^{®} 991 as the used polyethylene wax (PE-wax) | 72°C - 124°C |
| 3 | Lanco^{®}-wax PP 1362D used as a modified (acrylic- and polyurethane modified) polypropylene wax (modified PP-wax) | 61°C - 147°C |
| 4 | Orgasol^{®} 2001 UD NAT2 --- PA12-used wax - polyamide based | 162°C - 185°C |

The (polymer)waxes according to table 1 were dispersed in (commercially available) aqueous dispersions according to the table 2 (in order to obtain the relevant secondary dispersions).

**table 2 (used preprepared aqueous dispersions containing A1 - as used intermediate products, in order to prepare the dispersions to be tested)**

| | |
|---|---|
| about (in the order of magnitude) 100 wt.% EAA concerning polymer content | Dispersion (D.) Type 1 |
| about 90 wt.% EAA + 10 wt.% EVA (Yunico^{®} 491) | D. Type 2 |
| about (in the order of magnitude) 100 wt. % EAA concerning polymer content (Yunico^{®} 903) | D. Type 3 |
| about 45 wt. % EAA + 15 wt. % EAA + 40 wt. % PE/PP copolymer (Yunico^{®} 707) | D. Type 4 |
| Joncryl^{®} HSL 9032 - no EAA contained: but copolymer with structural units of styrene and acrylic esters | acrylic dispersion (not according to the invention) |
| 85% EAA (1) + 15% EVA (Yunico^{®} 765) | D. Type 5 |

EAA (as the A1 component): copolymer with structural units of ethylene and acrylic acid: used EAA generally has a content of acrylic acid based groups (in the order of magnitude) of approximately 20 wt.%
EVA (as a A33 component): copolymer with structural units of ethylene and vinyl acetate
PE/PP (as a A33 component): Copolymer with structural units of propylene and ethylene

**table 3a: (secondary) aqueous polymer dispersions produced to be tested**

| | Example 1 | | Example 2 | | Example 3 | |
|---|---|---|---|---|---|---|
| | Lacquer [%] | Dryed [g] | Lacquer [%] | Dryed [g] | Lacquer [%] | Dryed [g] |
| D. Type 1 | 91.3 | 30.1 | | | | |
| D. Type 2 | | | 91.3 | 22.8 | | |
| D. Type 3 | | | | | 91.3 | 25.6 |
| Polyethylene-Wax | 4.3 | 4.3 | 4.3 | 4.3 | 4.3 | 4.3 |
| Polysiloxan Deformer | 0.4 | 0 | 0.4 | 0 | 0 | 0 |
| N-BUTANOL | 2 | 0 | 2 | 0 | 2 | 0 |
| ISOPROPANOL | 2 | 0 | 2 | 0 | 2 | 0 |
| sum | 100 | 34 | 100 | 27 | 100 | 30 |

Each of the Examples 1 - 3 contain A22 - providing a dispersion containing solid polymer at 120 °C.

### Additionally provided, a non-aqueous polyvinylchloride (PVC) containing lacquer (not according to the invention)

**table 3b: test results concerning table 3a and the PVC lacquer**

| **(Peel value) 240°C o.B. 180°C u.B. 2s 800N Body vs Body** | Example 1 | Example 2 | Example 3 | PVC-lacquer |
|---|---|---|---|---|
| Maximum sealing strength [N/15mm] | 25.5 | 18.0 | 20.5 | 15.5 |
| Average sealing strength [N/15mm] | 19.2 | 13.9 | 16.0 | 13.9 |
| Visual assessment of the dried coating after (20 wt.% ethanol/ 80 wt.% water) cooking (120 min, at about 120 °C) [Blushing/Delamination] | ok/ok | ok/ok | ok/ok | ok/ok |
| Block test | Ok (0) | Minimal sticky (1) | Minimal sticky (1) | Ok (0) |

According to 3aa) the same formulations as in table 3a were prepared - but without n-butanol and isopropanol. The formulations according to 3aa) were tested accordingly - with nearly the same results as in table 3b) - showing that it also works accordingly in the absence of n-butanol and isopropanol. In this connection please also compare Example 1 (with solvents) with Example 7 (comparable with Example 1 - but with no solvents): "both showing similar results".

**table 4a: (secondary) aqueous polymer dispersions produced to be tested**

| | Example 4 | | Example 5 | | Example 6 | | Example 7 | |
|---|---|---|---|---|---|---|---|---|
| | Lacquer [%] | Dryed [g] | Lacquer [%] | Dryed [g] | Lacquer [%] | Dryed [g] | Lacquer [%] | Dryed [g] |
| D. Type 1 | | | | | | | 91.3 | 30.1 |
| D. Type 4 | 91.3 | 26.5 | | | | | | |
| Acrylic Dispersion | | | 91.3 | 41.1 | | | | |
| D. Type 5 | | | | | 91.3 | 27.4 | | |
| Polyethylene-Wax | 4.3 | 4.3 | 4.3 | 4.3 | 4.3 | 4.3 | 4.3 | 4.3 |
| Polysiloxan Deformer | 0.4 | 0 | 0.4 | 0,0 | 0.4 | 0 | 0.4 | 0 |
| n-butanol | 2 | 0 | 2.0 | 0,0 | 2.0 | 0 | - | 0 |
| Isopropanol | 2 | 0 | 2.0 | 0,0 | 2.0 | 0 | - | 0 |
| sum | 100 | 31 | 100 | 45 | 100 | 32 | 96 | 34 |

Each of the Examples 4 - 7 contain A22 - examples 4, 6 and 7 providing a (homogenous) dispersion containing solid polymer at 120 °C; however, in example 5 the wax is insufficiently dispersed (the dispersing polymer EAA not contained).

**table 4b: test results concerning table 4a**

| **(Peel value) 240°C o.B. 180°C u.B. 2s 800N Body vs Body** | Example 4 | Example 5 | Example 6 | Example 7 |
|---|---|---|---|---|
| Maximum sealing strength [N/15mm] | 9.5 | 9.7 | 20.5 | 27.4 |
| Average sealing strength [N/15mm] | 7.2 | 7.3 | 14.7 | 17.6 |
| Visual assessment of the dried coating after (20 wt.% ethanol/ 80 wt.% water) cooking (120 min, at about 120 °C) [Blushing/Delamination] | Slight blush | blushed/ loss of adhesion | blushed/ loss of adhesion | ok/ok |
| Block test | OK (0) | Minimal sticky (1) | Minimal sticky (1) | Ok (0) |

**table 5a: (secondary) aqueous polymer dispersions produced to be tested (but with no wax used)**

| | Example 8 | | Example 9 | | Example 10 | |
|---|---|---|---|---|---|---|
| | Lacquer [%] | Dryed [g] | Lacquer [%] | Dryed [g] | Lacquer [%] | Dryed [g] |
| D. Type 1 | 100 | 33 | | | | |
| D. Type 2 | | | 100 | 25 | | |
| D. Type 4 | | | | | 100 | 29 |
| Wax | - | - | - | - | - | - |
| Polysiloxan Deformer | 0.4 | 0 | 0.4 | 0.0 | 0.4 | 0.0 |
| N-BUTANOL | 2.0 | 0 | 2.0 | 0.0 | 2.0 | 0.0 |
| ISOPROPANOL | 2.0 | 0 | 2.0 | 0.0 | 2.0 | 0.0 |
| sum | 104 | 33 | 104 | 25 | 104 | 29 |

Each of the Examples 8 - 10 do not contain A22 - provided is a dispersion containing no solid polymer at 120 °C.

**table 5b: test results concerning table 5a**

| **(Peel value) 240°C o.B. 180°C u.B. 2s 800N Body vs Body** | Example 8 | Example 9 | Example 10 |
|---|---|---|---|
| Maximum sealing strength [N/15mm] | 26.8 | 37.3 | 18.5 |
| Average sealing strength [N/15mm] | 18.5 | 19.8 | 14.1 |
| Visual assessment of the dried coating after (20 wt.% ethanol/ 80 wt.% water) cooking (120 min, at about 120 °C) [Blushing/Delamination] | Blushing | Slight blush | blushing |
| Block test | Blocked | Blocked | Blocked |

According to 5aa) the same formulations as in table 5a were prepared - but without n-butanol and isopropanol; said formulations according to 5aa) were tested accordingly - with nearly the same results as in table 5b) - so that the shown effects can be addressed to the absence of the wax (and not to absence of the missing n-butanol and isopropanol)

**table 6a: (secondary) aqueous polymer dispersions produced to be tested (but with different waxes used)**

| | Example 11 | | Example 12 | | Example 13 | |
|---|---|---|---|---|---|---|
| | Lacquer [%] | Dryed [g] | Lacquer [%] | Dryed [g] | Lacquer [%] | Dryed [g] |
| D. Type 1 | 91.3 | 30.1 | 91.3 | 30.1 | 91.3 | 30.1 |
| Polyethylene-wax | 4.3 | 4.3 | | | | |
| Modified polypropylenew wax | | | 4.3 | 4.3 | | |
| Polyamid wax | | | | | 4.3 | 4.3 |
| Polysiloxan Deformer | 0.4 | 0 | 0.4 | 0 | 0.4 | 0 |
| N-BUTANOL | 2.0 | 0 | 2 | 0 | 2 | 0 |
| ISOPROPANOL | 2.0 | 00 | 2 | 0 | 2 | 0 |
| Summe | 100 | 34 | 100 | 34 | 100 | 34.4 |

Each of the Examples 11 - 13 contain A22 - provided is a dispersion containing solid polymer at 120 °C.

**table 6b: test results concerning table 6a**

| **(Peel value) 240°C o.B. 180°C u.B. 2s 800N Body vs Body** | Example 11 | Example 12 | Example 13 |
|---|---|---|---|
| Maximum sealing strength [N/15mm] | 25.8 | 23.8 | 24.4 |
| Average sealing strength [N/15mm] | 17.1 | 16.9 | 17.0 |
| Visual assessment of the dried coating after (20 wt.% ethanol/ 80 wt.% water) cooking (120 min, at about 120 °C) [Blushing/Delamination] | ok/ok | Slight blush | ok/ok |
| Block test | Ok (0) | Ok (0) | Minimal sticky (1) |

**table 7a: (secondary) aqueous polymer dispersions produced to be tested (but with different/ and high amounts of wax)**

| | Example 14 | | Example 15 | | Example 16 | |
|---|---|---|---|---|---|---|
| | Lacquer [%] | Dryed [g] | Lacquer [%] | Dryed [g] | Lacquer [%] | Dryed [g] |
| D. Type 1 | 62.0 | 20.5 | 55.0 | 18.2 | 45 | 14.9 |
| Polyethylene-Wax | 11.3 | 11.3 | 13.4 | 13.4 | 16.5 | 16.5 |
| water | 13.2 | 0 | 15.7 | 0 | 19.2 | 0 |
| Polysiloxan Deformer | 0.3 | 0 | 0.3 | 0 | 0.2 | 0 |
| N-BUTANOL | 3.3 | 0 | 4.0 | 0 | 4.8 | 0 |
| ISOPROPANOL | 9.8 | 0 | 11.6 | 0 | 14.3 | 0 |
| Summe | 100 | 32 | 100 | 32 | 100 | 31 |

Each of the Examples 14 - 16 contain A22 - providing a dispersion containing solid polymer at 120 °C.

**table 7b: test results concerning table 7a**

| **(Peel value) 240°C o.B. 180°C u.B. 2s 800N Body vs Body** | Example 14 | Example 15 | Example 16 |
|---|---|---|---|
| Maximum sealing strength [N/15mm] | 26.4 | 24.2 | 24.7 |
| Average sealing strength [N/15mm] | 17.8 | 16.5 | 15.8 |
| Visual assessment of the dried coating after (20 wt.% ethanol/ 80 wt.% water) cooking (120 min, at about 120 °C) [Blushing/Delamination] | blushing | blushing | blushing |
| Block test | Ok (0) | Ok (0) | Ok (0) |

### Concerning measuring methods:

Why is a distinction made between "maximum" and "medium" sealing strength? - the following simple explanations for the basic understanding only:
"Average" sealing strength: "measured average force along the testing distance" ("relevant concerning the peeling behavior when separating lidding foil from container")
"Maximum" sealing strength: normally relevant at the beginning of the test ("force which is required to initially break the adhesion of lidding and body")

### Examinations:

### Test method: peel value (sealed-seam strength)

Especially since coffee capsules do not represent suitable mechanical test bodies due to geometric reasons - the relevant peel values were measured as follows:
The "peel value" is measured according to a modified DIN55529 (2012 edition), which is relevant concerning "determining the sealed-seam strength of sealings made of flexible packaging material".

In this connection the two modifications (adjustments) to said DIN are fulfilled:
- trigger angle is 180° (instead of 90 °C in the original DIN)
- testing speed is 200 mm/min (instead of 100 mm/min in the original DIN) Sealing is carried out according to the "Fin seal" method ASTMF88/F88M-15 on 15 mm wide test strips. The sealing surface is 10*15 mm. The sealing conditions in the laboratory are: contact time: 2 seconds, pressure: 800 N, Sealing jaw width: 10 mm, Upper sealing jaw: 240 °C, lower sealing jaw: 180 °C; the specimens are prepared with a heat contact device type HSG-C of "Brugger Feinmechanik": bottom/bottom 2" 240 °C upper sealing jaw 180 °C lower sealing jaw 10 mm 800 N.

### Test method: ethanol cooking (stress test)

In order to assess the migration studies for clear drinks like coffee the EU regulation No. 10/2011 Annex III dictates 20 Vol.-% ethanol solution as extraction simulant. For preventing expensive migration studies, only samples without optical defects like blushing and obvious delamination are selected for these studies. A lab testing method is installed by forming a shell of plain coated substrate by bending the sides upwards, leading to an inner area of 10 cm*15 cm. The shell is filled with 35 g of ethanol solution. An ethanolic steam environment is created by filling a closable larger container (e. g. 30 l pail) with a level of 10 % of exactly the same ethanol-solution. The specimen shells are stored on a rack above the liquid line. The whole container is hermetically closed and stored for 2 hours at 120 °C in an oven. After finishing the procedure, the specimen are dried with lab tissue and immediately treated by scratching the surface with a wooden spatula. The test is ok in case that no coating film can be removed from the aluminum surface. Secondly, the blushing is rated by comparing the specimen to an untreated specimen. The test is ok in case no visible blush is detected.

### Test method: block test

Purpose: The test procedure of this standard is used to check the adhesive behavior of paint films under constant pressure (related to practice).

Sample: An average sample is taken from a paint material to be tested according to ISO 15112 and prepared according to ISO 1513. Samples from coated objects shall be taken or selected so that they can be considered as average samples; Preparation of the test specimen: The substrate for the trial coating shall be the material (including surface quality) for which the coating is intended, or which is specified in the terms of delivery. The substrate is prepared or pre-treated in a manner to be agreed (e.g. degreasing, pickling, phosphating, grinding). The coating material or coating system to be tested shall be applied in the usual manner and thickness or layer in accordance with the production process and dried as agreed and, if necessary, post-treated. The test samples are painted plates with length 50 mm and width 50 mm prepared as described in Sections 5.1 - 5.3. Three test specimens for each coating material to be tested (backside coating). The test specimens are stacked against the back between two chipboards (for even pressure distribution). The screw clamp is closed with a torque wrench with a defined force of 20 Nm. If the specification deviates from 20 Nm, this must be noted. Storage: 1 hour at 40 °C in a drying oven (standard conditions). After removal from the oven and cooling of the formats, the lacquer surface is evaluated.

Evaluation criteria: 0 = OK / no gluing; 1 = minimal sticky (tick); 2 = slightly sticky; 3 = clearly sticky (slight "picking tendency"); 4 = very sticky (strong "picking tendency" or fusion)

### Example concerning a brewing process (according to the present invention):

### Preparation of the brewing container:

A lacquer according to example 2 is used (for both foils). An aluminum body foil (90 µm) is coated with said lacquer on the back side: coat foil (90 µm) with heat seal lacquer (7 +/- 1g/m²), temperature treatment 20 s 235 °C peak metal temperature (PMT) 216 -224 °C; the aluminum coat lid foil (30 µm) on matt side with heat seal lacquer (10 +/-1 g/m²) 20 s 180 °C; PMT = 160 °C. Greasing the 90 µm foil, followed by deep drawing it to receive a capsule. Cutting lidding film into 34 mm circles. Filling capsules with approx. 5 g coffee powder. Sealing the capsules with 0,2 s 250 °C 5 bar.

### Brewing process:

Brewing capsules with a (Krups type X/N 4006 45 s) coffee extrusion machine: The extraction process takes place at about 10 bar. For an Espresso, about 40 mL of water is used, resulting in a temperature of approximately 75 °C. For a Lungo, about 105 mL are used, resulting in a temperature of approximately 82 °C.

### Evaluation of the results of the brewing process:

The cooled capsules remained tight. Opening capsules, in order to remove extracted coffee powder and check for any damage of the coating. The coating remains intact during the extraction process, the underlying aluminum does not come into contact with the extraction agent. The coating allows to make a coffee without negatively influencing the taste and aroma of the used coffee. There is no deterioration of the coffee taste during the brewing process or contamination with hazardous materials.

## Claims

1. Aqueous polyolefin dispersion Y comprising as ingredients
a) from 41 to 97 wt.% of A1, copolymer containing structural units of ethylene and (meth)acrylic acid (EAA),
b) A2, polymer containing no structural units of (meth)acrylic acid, which as such is solid at 120 °C and
from 3 to 34 wt.% of A22, a polymer portion containing no structural units of (meth)acrylic acid and which as such is completely solid at a temperature of 60 °C and completely melted at a temperature of 190 °C, where at least a partial quantity of A22 is provided by A2,
the wt.% of the ingredients are based on the dried dispersion Y (drying the aqueous dispersion 30 min at 150 °C; according to DIN EN ISO 3251),
where the dried dispersion Y contains solid polymer at a temperature of 120 °C (the melting range or melting point is measured using differential scanning calorimetry (DSC) according to a modified DIN EN ISO 11357-1:2017-02; relevant modifications: the measurements were carried out under nitrogen in a temperature range of - 20 to 200 °C and a heating rate of 10 K/min).

2. Aqueous polyolefin dispersion Y according to claim 1 which does not contain solid polymer at a temperature of 190 °C.

3. Aqueous polyolefin dispersion Y according to claim 1 or 2 comprising as ingredient from 41 - 94 wt.% of A1.

4. Aqueous polyolefin dispersion Y according to one of the claims 1 - 3, comprising as ingredients from 41 to 94 wt.% of A1 and from 6 to 24 wt.% of A22.

5. Aqueous polyolefin dispersion Y according to one of the claims 1 - 4, comprising as ingredients
a) from 41 to 91 wt.% of A1,
b) from 6 to 24 wt.% of A22 and
c) from 3 to 35 wt.% of A33, a copolymer portion containing no structural units of (meth)acrylic acid and which as such is not completely solid at a temperature of 60 °C, where A33 does not provide polymer which as such is solid at 120 °C.

6. Aqueous polyolefin dispersion Y according to claim 5, wherein at least 50 wt.%, preferably at least 80 wt.% of the species of A33 are selected from the group consisting of copolymers (EVA) containing structural units of ethylene and vinyl acetate and copolymers containing structural units of ethylene and olefines having at least three carbon atoms.

7. Aqueous polyolefin dispersion Y according to one of the claims 1 - 6, where at least 50 wt.% of A1, preferably at least 80 wt.% of A1 has a content of (meth)acrylic acid based groups of 10-30 wt.% and ethylene based groups of 70-90 wt.% based on all contained copolymer structural units.

8. Aqueous polyolefin dispersion Y according to one of the claims 1 - 7, where at least 50 wt.% of A2 and/ or A22, preferably at least 80 wt.% of A2 and/ or A22 are selected from the group consisting of polyethylene based (PE), polypropylene based (PP) and polyamide based waxes.

9. Aqueous polyolefin dispersion Y according to one of the claims 1 - 8, containing as ingredients inorganic filler, defoamer, ammonia or other basic pH regulators.

10. A container C comprising a lidding foil and a body defining a receiving space, the lidding foil and the body are connected to one another with a heat-sealed seam, where the heat-sealed seam contains a heat-seal lacquer containing or consisting of a coating based on a dried aqueous polyolefin dispersion Y according to one of the claims 1 - 9.

11. A container C according to claim 10 which is provided by a closed beverage-brewing container.

12. A container C according to claim 10 or 11, where the lidding foil and the body defining the receiving space are each provided by a metal or a metal alloy, preferably on the basis of aluminum.

13. A container C according to one of the claims 10 - 12, where the body has a flange extending from its jacket wall, where the heat-sealed seam lies on said flange.

14. A container C according to one of the claims 10 - 13, where the inner surface of the body is completely coated with the heat-seal lacquer and where said heat-seal lacquer coating preferably has a thickness of 6 - 12 g/m².

15. An extraction process carried out in a container C according to one of the claims 10 - 14, in which at least a portion of at least one transition component is separated from a carrier by a solvent, where the receiving space contains the carrier.

16. An extraction process according to claim 15, where after the separation from the carrier at least a portion of the at least one transition component is discharged from the closed container by means of the solvent and whereby at least a portion of the carrier is retained in the container C, which is preferably accomplished by means of filtration.

17. Use of an aqueous polyolefin dispersion Y according to one of the claims 1 - 9 as a heat-seal lacquer.

18. Use according to claim 17, where the heat-seal lacquer is provided to close a container, preferably a beverage-brewing container.

## Patentansprüche

1. Wässrige Polyolefin-Dispersion Y, die als Bestandteile enthält
a) 41 bis 97 Prozent A1, ein Copolymer, das Struktureinheiten aus Ethylen und (Meth)acrylsäure (Ethylen-Acrylsäure) enthält,
b) A2, ein Polymer, das keine Struktureinheiten von (Meth)acrylsäure enthält und als solches bei 120 °C fest ist, und
drei bis 34 Prozent A22, einen Polymeranteil, der keine Struktureinheiten von (Meth)acrylsäure enthält und der als solcher bei einer Temperatur von 60 °C vollständig fest und bei einer Temperatur von 190 °C vollständig geschmolzen ist, wobei zumindest ein Teil von A22 durch A2 bereitgestellt wird,
wobei sich die Gewichtsprozente der Bestandteile auf die getrocknete Dispersion Y beziehen (Trocknung der wässrigen Dispersion 30 min bei 150 °C; gemäß DIN EN ISO 3251),
wobei die getrocknete Dispersion Y bei einer Temperatur von 120 °C festes Polymer enthält (der Schmelzbereich oder Schmelzpunkt wird mittels Differential-Scanning-Kalorimetrie (DSC) gemäß einer modifizierten DIN EN ISO 11357-1:2017-02 gemessen; relevante Modifikationen: Die Messungen wurden unter Stickstoff in einem Temperaturbereich von -20 bis 200 °C und bei einer Aufheizrate von 10 K / min durchgeführt).

2. Wässrige Polyolefin-Dispersion Y nach Anspruch eins, die bei einer Temperatur von 190 °C kein festes Polymer enthält.

3. Wässrige Polyolefin-Dispersion Y gemäß Anspruch eins oder zwei, die als Bestandteil 41-94 Prozent von A1 enthält.

4. Wässrige Polyolefin-Dispersion Y gemäß einem der Ansprüche eins bis drei, , die als Bestandteile 41 bis 94 Prozent von A1 und sechs bis 24 Prozent von A22 enthält.

5. Wässrige Polyolefin-Dispersion Y gemäß einem der Ansprüche eins bis vier, die als Bestandteile
a) 41 bis 91 Prozent A1,
b) sechs bis 24 Prozent A22 und
c) drei bis 35 Prozent A33, einen Copolymer-Anteil, der keine Struktureinheiten von (Meth)acrylsäure enthält und der als solcher bei einer Temperatur von 60 °C nicht vollständig fest ist, wobei A33 kein Polymer liefert, das als solches bei 120 °C fest ist.

6. Wässrige Polyolefin-Dispersion Y nach Anspruch fünf, wobei man mindestens 50 Prozent, vorzugsweise mindestens 80 Prozent der A33-Spezies aus der Gruppe auswählt, die aus Copolymeren (EVA) mit Struktureinheiten aus Ethylen und Vinylacetat sowie aus Copolymeren mit Struktureinheiten aus Ethylen und Olefinen mit mindestens drei Kohlenstoffatomen besteht.

7. Wässrige Polyolefin-Dispersion Y gemäß einem der Ansprüche eins-6, wobei mindestens 50 Prozent, vorzugsweise mindestens 80 Prozent von A1 einen Gehalt an (Meth)acrylsäure-basierten Gruppen von 10-30 Prozent und an Ethylen-basierten Gruppen von 70-90 Prozent, bezogen auf alle enthaltenen Copolymer-Struktureinheiten, aufweisen.

8. Wässrige Polyolefin-Dispersion Y gemäß einem der Ansprüche einssieben, wobei mindestens 50 Prozent von A2 und / oder A22, vorzugsweise mindestens 80 Prozent von A2 und / oder A22 aus der Gruppe ausgewählt sind, die aus Wachsen auf Polyethylenbasis (PE), auf Polypropylenbasis (PP) und auf Polyamidbasis besteht.

9. Wässrige Polyolefin-Dispersion Y gemäß einem der Ansprüche einsacht, enthaltend als Bestandteile anorganischen Füllstoff, Entschäumer, Ammoniak oder andere basische pH-Regulatoren.

10. Behälter C, bestehend aus einer Deckelfolie und einem einen Aufnahmeraum bildenden Körper, wobei die Deckelfolie und der Körper durch eine Heißsiegelnaht miteinander verbunden sind, wobei die Heißsiegelnaht einen Heißsiegellack enthält, der eine Beschichtung auf der Basis einer getrockneten wässrigen Polyolefin-Dispersion Y gemäß einem der Ansprüche eins bis neun enthält oder aus dieser besteht.

11. Behälter C nach Anspruch zehn, der als geschlossener Getränkezubereitungsbehälter ausgebildet ist.

12. Behälter C nach Anspruch zehn oder elf, wobei die Deckelfolie und der den Aufnahmeraum bildende Körper jeweils aus einem Metall oder einer Metalllegierung, vorzugsweise auf Aluminiumbasis, bestehen.

13. Behälter C nach einem der Ansprüche zehn-12, wobei der Körper einen von seiner Mantelwand ausgehenden Flansch aufweist, wobei die Heißsiegelnaht auf diesem Flansch liegt.

14. Behälter C nach einem der Ansprüche 10-13, wobei die Innenfläche des Körpers vollständig mit dem Heißsiegellack beschichtet ist und wobei die Heißsiegellackbeschichtung vorzugsweise eine Dicke von sechs-zwölf g / m² aufweist.

15. Ein Extraktionsverfahren, das in einem Behälter C gemäß einem der Ansprüche 10-14 durchgeführt wird, bei dem mindestens ein Teil mindestens einer Übergangskomponente durch ein Lösemittel von einem Träger abgetrennt wird, wobei der Aufnahmeraum den Träger enthält.

16. Extraktionsverfahren nach Anspruch 15, wobei nach der Trennung vom Träger mindestens ein Teil der mindestens einen Übergangskomponente mittels des Lösungsmittels aus dem geschlossenen Behälter ausgetragen wird und wobei mindestens ein Teil des Trägers im Behälter C zurückgehalten wird, was vorzugsweise mittels Filtration erfolgt.

17. Verwendung einer wässrigen Polyolefin-Dispersion Y gemäß einem der Ansprüche eins-neun als Heißsiegellack.

18. Verwendung nach Anspruch 17, wobei der Heißsiegellack zum Verschließen eines Behälters, vorzugsweise eines Getränkebereitungsbehälters, vorgesehen ist.

## Revendications

1. Dispersion aqueuse de polyoléfine Y comprenant comme ingrédients
a) de 41 à 97 % en poids de A1, un copolymère contenant des motifs structuraux d'éthylène et d'acide (méth)acrylique (EAA),
b) A2, un polymère ne contenant pas de motifs structuraux d'acide (méth)acrylique, qui, en l'état, est solide à 120 °C, et
de 3 à 34 % en poids de A22, une fraction polymère ne contenant pas de motifs structuraux d'acide (méth)acrylique et qui, en tant que telle, est entièrement solide à une température de 60 °C et entièrement fondue à une température de 190 °C, au moins une partie de A22 étant fournie par A2,
les pourcentages en poids des constituants étant rapportés à la dispersion séchée Y (séchage de la dispersion aqueuse pendant 30 min à 150 °C ; selon la norme DIN EN ISO 3251),
la dispersion séchée Y contenant du polymère solide à une température de 120 °C (l'intervalle de fusion ou le point de fusion est mesuré par calorimétrie différentielle à balayage (DSC) selon la norme DIN EN ISO 11357-1:2017-02 modifiée ; modifications pertinentes : les mesures ont été effectuées sous azote dans une plage de températures comprise entre -20 et 200 °C et à une vitesse de chauffage de 10 K/min).

2. Dispersion aqueuse de polyoléfine Y selon la revendication 1, qui ne contient pas de polymère solide à une température de 190 °C.

3. Dispersion aqueuse de polyoléfine Y selon la revendication 1 ou 2, comprenant comme ingrédient de 41 à 94 % en poids de A1.

4. Dispersion aqueuse de polyoléfine Y selon l'une des revendications 1 à 3, comprenant comme ingrédients de 41 à 94 % en poids de A1 et de 6 à 24 % en poids de A22.

5. Dispersion aqueuse de polyoléfine Y selon l'une des revendications 1 à 4, comprenant comme ingrédients
a) de 41 à 91 % en poids d'A1,
b) de 6 à 24 % en poids d'A22 et
c) de 3 à 35 % en poids d'A33, une fraction de copolymère ne contenant aucune unité structurale d'acide (méth)acrylique et qui, en tant que telle, n'est pas complètement solide à une température de 60 °C, A33 ne fournissant pas de polymère qui, en tant que tel, soit solide à 120 °C.

6. Dispersion aqueuse de polyoléfine Y selon la revendication 5, dans laquelle au moins 50 % en poids, de préférence au moins 80 % en poids, des espèces de A33 sont choisies dans le groupe constitué par les copolymères (EVA) contenant des motifs structuraux d'éthylène et d'acétate de vinyle et les copolymères contenant des motifs structuraux d'éthylène et d'oléfines comportant au moins trois atomes de carbone.

7. Dispersion aqueuse de polyoléfine Y selon l'une des revendications 1 à 6, dans laquelle au moins 50 % en poids de A1, de préférence au moins 80 % en poids de A1, présente une teneur en groupes à base d'acide (méth)acrylique de 10 à 30 % en poids et en groupes à base d'éthylène de 70 à 90 % en poids, par rapport à l'ensemble des motifs structuraux de copolymère contenus.

8. Dispersion aqueuse de polyoléfine Y selon l'une des revendications 1 à 7, dans laquelle au moins 50 % en poids de A2 et/ou de A22, de préférence au moins 80 % en poids de A2
et/ou de A22 sont choisis parmi le groupe constitué des cires à base de polyéthylène (PE), à base de polypropylène (PP) et à base de polyamide.

9. Dispersion aqueuse de polyoléfine Y selon l'une des revendications 1 à 8, contenant comme ingrédients une charge inorganique, un agent antimousse, de l'ammoniac ou d'autres régulateurs de pH basiques.

10. Récipient C comprenant une feuille de couvercle et un corps définissant un espace de réception, la feuille de couvercle et le corps étant reliés l'un à l'autre par un joint thermoscellé, le joint thermoscellé contenant une laque thermoscellable comprenant ou constituée d'un revêtement à base d'une dispersion aqueuse séchée de polyoléfine Y selon l'une des revendications 1 à 9.

11. Récipient C selon la revendication 10, qui est constitué d'un récipient fermé destiné à la préparation de boissons.

12. Récipient C selon la revendication 10 ou 11, dans lequel la feuille de couvercle et le corps définissant l'espace de réception sont chacun constitués d'un métal ou d'un alliage métallique, de préférence à base d'aluminium.

13. Récipient C selon l'une des revendications 10 à 12, dans lequel le corps comporte
une bride s'étendant à partir de sa paroi d'enveloppe, le joint thermosoudé se situant sur ladite bride.

14. Récipient C selon l'une des revendications 10 à 13, dans lequel la surface intérieure du corps est entièrement recouverte d'une laque thermoscellable et dans lequel ledit revêtement de laque thermoscellable présente de préférence une épaisseur de 6 à 12 g/m².

15. Procédé d'extraction mis en œuvre dans un récipient C selon l'une des revendications 10 à 14, dans lequel au moins une partie d'au moins un composant de transition est séparée d'un support par un solvant, l'espace de réception contenant le support.

16. Procédé d'extraction selon la revendication 15, dans lequel, après la séparation du support, au moins une partie du ou des composants de transition est évacuée du récipient fermé au moyen du solvant, et dans lequel au moins une partie du support est retenue dans le récipient C, ce qui est de préférence réalisé par filtration.

17. Utilisation d'une dispersion aqueuse de polyoléfine Y selon l'une des revendications s 1 à 9 en tant que vernis thermoscellable.

18. Utilisation selon la revendication 17, dans laquelle la laque thermoscellable est destinée à fermer un récipient, de préférence un récipient destiné à la préparation de boissons.
